Europäisches Patentamt

European Patent Office

Office européen des brevets

(19)

(11) Veröffentlichungsnummer: **0 107 775**

**A1**

# (12) EUROPÄISCHE PATENTANMELDUNG

(21) Anmeldenummer: 83109171.5

(22) Anmeldetag: 16.09.83

(51) Int. Cl.³: **F 16 D 1/06**

(30) Priorität: 01.10.82 DE 3236376

(43) Veröffentlichungstag der Anmeldung:
09.05.84 Patentblatt 84/19

(84) Benannte Vertragsstaaten:
DE FR GB IT SE

(71) Anmelder: MTU MOTOREN- UND TURBINEN-UNION
MÜNCHEN GMBH
Dachauer Strasse 665 Postfach 50 06 40
D-8000 München 50(DE)

(72) Erfinder: Thoma, Martin, Dr.-Ing.
Giselastrasse 3
D-8000 München 40(DE)

(72) Erfinder: Bünger, Paul, Dipl.-Ing.
Hörwarthstrasse 51
D-8000 München 40(DE)

(54) Verfahren zum Schützen von metallenen, kraftschlüssig gepaarten Maschinenteilen vor Reibkorrosion.

(57) Bei einem Verfahren zum Schützen von metallenen, kraftschlüssig gepaarten, schwingend belasteten Maschinenteilen, insbesondere Maschinenteile gleicher Beschaffenheit, vor Reibkorrosion, wobei ein direkter Kontakt zwischen den Fügeflächen vermieden wird, indem zwischen den gepaarten Flächen mindestens an einer Fläche eine Materialschicht mit anderer Beschaffenheit als der der Maschinenteile angebracht wird, findet erfindungsgemäß bei Maschinenteilen mit oder aus Titanwerkstoffen eine metallene Materialschicht Verwendung, die eine andere Kristallstruktur und eine geringere Härte besitzt als die der Titanwerkstoffe. Die Materialschicht wird galvanisch oder chemisch aufgetragen und besteht vorteilhafterweise aus Kupfer, Aluminium oder Silber, wobei die Dicke 5 - 50 µm beträgt. Dadurch können Titanwerkstoffe vor Reibdauerbrüchen auf einfache Weise geschützt werden.

EP 0 107 775 A1

0107775

hk/ba/fr

MTU ·MOTOREN- UND TURBINEN-UNION
MÜNCHEN GMBH

Verfahren zum Schützen von metallenen,
kraftschlüssig gepaarten Maschinenteilen
vor Reibkorrosion

Die Erfindung betrifft ein Verfahren zum Schützen von
metallenen, kraftschlüssig gepaarten, schwingend belasteten Maschinenteilen, insbesondere Maschinenteilen
gleicher Beschaffenheit, vor Reibkorrosion, wobei ein
direkter Kontakt zwischen den Fügeflächen vermieden wird,
indem zwischen den gepaarten Flächen mindestens an einer
Fläche eine Materialschicht mit anderer Beschaffenheit
als der der Maschinenteile angebracht wird. Bei metallenen,
kraftschlüsslig gepaarten Maschinenteilen, wie z.B. bei
Triebwerken aus Titan, insbesondere im Bereich der Schaufelfüße, treten gelegentlich bereits bei Beanspruchungen weit
unterhalb der Dauerfestigkeit Dauerbrüche auf, die von Oberflächenbereichen mit Reibkorrosionsschäden ausgehen. Die Ursache dafür ist eine komplexe Oberflächenbeanspruchung, die
mit "Reibdauerbeanspruchung" bezeichnet wird. Diese Reibdauerbeanspruchung setzt sich zusammen aus einer Flächenpressung und einer wechselnden Schubspannung infolge kleinster Scheuerbewegungen (Schlupf) der gepaarten Oberflächen.
Die dabei auftretenden Schubspannungen sind unerwartet hoch.

T-697

Die Reibdauerbeanspruchung kann auf zweifache Art das Maschinenteil schädigen. Zum einen kann "Reibkorrosion" als Oberflächenschaden entstehen, zum anderen erfolgt eine Minderung der Dauerfestigkeit von schwingend belasteten Maschinenteilen, wenn zwei Metalle gegeneinander reiben. Die Bewegung ist zyklisch oszillierend mit einer Bewegungsrichtung parallel zur Fügeoberfläche. Die Schwingamplitude ist so klein, daß Oberflächenschädigung durch Abrasion erfolgt, aber keine Abriebstoffe aus den Kontaktflächen entfernt werden können.

Der Reibkorrosionsschaden läßt Rückschlüsse auf die Reibdauerbeanspruchung zu. Überschreitet nämlich die Reibdauerbeanspruchung die Festigkeit des Werkstoffes, so entstehen Mikro-Anrisse in der Oberfläche. Dabei können aus der Oberfläche tribochemisch aktivierte Partikel austreten, die mit dem Sauerstoff der Umgebungsluft oder Sauerstoff als Arbeitsmedium spontan reagieren. Die so entstandenen oxidischen Abriebprodukte führten zu der Bezeichnung Reibkorrosion.

Über das Ausmaß der Oberflächenzerstörung kann folgende Feststellung getroffen werden:

- der Grenzflächenverschleiß steigt mit der Anzahl der Reibschwingungen,
- der Grenzflächenverschleiß steigt mit zunehmender Flächenpressung,
- der Ausgangszustand der Grenzfläche beeinflußt das Ausmaß der Zerstörung praktisch nicht,
- Schmiermittel haben nur einen geringen Einfluß auf die Verminderung von Reibkorrosionsschäden.

T-697

Wird ein schwingend belastetes Maschinenteil zusätzlich
einer Reibdauerbeanspruchung an der Oberfläche unterworfen,
so tritt eine Minderung der Dauerhaltbarkeit ein. Für den
Bruch eines schwingend belasteten Bauteils, welcher von
einer solchen reibdauerbeanspruchten Oberfläche ausgeht,
wird in der Praxis die Bezeichnung "Reibdauerbruch" benutzt. Der Reibdauerbruch ist durch oxidische Abriebprodukte und durch eine "Nase" am Ausgangspunkt des Bruchs
sicher von anderen Dauerbrüchen zu unterscheiden.

Als "Reibdauerhaltbarkeit" wird diejenige größte schwingende Beanspruchung im Bauteil bezeichnet, bei der noch
kein Reibdauerbruch auftritt.

Die Gefahr von Reibdauerbrüchen ist an schwingend belasteten
Maschinenteilen oder Baugruppen immer dann gegeben, wenn
diese so gestaltet sind, daß bei Belastung schwingende
Relativverschiebungen (Schlupf) der gepaarten Oberfläche
möglich werden. So treten Reibdauerbrüche u.a. auch sehr
häufig an Dichtungseinsätzen für Rotoren von Turbokompressoren auf und insbesondere bei Triebwerken mit Titanschaufeln im Bereich der Schaufelfüße.

Zur Vermeidung der Brüche wurden bereits verschiedene
Schritte empfohlen (Forschungshefte-Forschungskuratorium
Maschinenbau e.V. Heft 56, 1976: "Reibkorrosion -
Abschlußbericht"), wie zum Beispiel

- Vermeidung von kraftschlüssig gepaarten Fügeflächen,
  z.B. durch Schweiß-, Löt- oder Klebeverbindungen
  anstelle von Schrumpf- und Spannverbindungen,
- Verminderung der Reibdauerbeanspruchung durch verschiedene Maßnahmen, z.B. durch möglichst geringe
  Dehnungsunterschiede der gefügten Teile oder durch

T-697

Trennung der Reibdauerbeanspruchung und der Bauteilbeanspruchung durch Entlastungskerben an den Verbindungselementen, die die gefügten Teile verbinden (z.B.
axiale und tangentiale Entlastungskerben in Paßschrauben für Flanschkupplungen).

Es ist bekannt, zwecks Erhöhung der Reibdauerhaltbarkeit
bzw. Verringerung der Reibkorrosion der Fügeteile nach
dem Stand der Technik (DE-AS 28 36 334) an den Fügeflächen
der Maschinenteile Verbindungselemente unterschiedlicher
Kristallstruktur und mit einer größeren Härte als die zu
fügenden Teile vorzusehen. Diese Verbindungselemente sind
jedoch diskrete Bauteile und vergleichsweise massiv und
mithin nur begrenzt einsetzbar. Ungeeignet sind derartige
Elemente für Triebwerke mit Titanschaufeln zwecks Verhinderung oder Verringerung der Reibkorrosion insbesondere
an den Schaufelfüßen infolge der verminderten Reibdauerhaltbarkeit des Werkstoffs unter Schwingreibbelastung.

Aufgabe der Erfindung ist es, ein Verfahren der eingangs genannten Art zu schaffen, durch das die Lebensdauer von kraftschlüssig gepaarten Maschinenteilen mit oder aus Titanwerkstoffen wesentlich verlängert und die Reibkorrosion an diesen
Teilen vermindert wird.

Gelöst wird die der Erfindung zugrundeliegende Aufgabe dadurch, daß bei Maschinenteilen mit oder aus Titanwerkstoffen
eine metallene Materialschicht verwendet wird, die eine
andere Kristallstruktur und eine geringere Härte besitzt als
die der Titanwerkstoffe.

Vorteilhafterweise findet eine Materialschicht Verwendung,
die durch galvanische Abscheidung am Maschinenteil angebracht wird.

Die Materialschicht kann aber zweckmäßigerweise auch alternativ durch chemische Abscheidung auf dem Maschinenteil aufgetragen werden.

Besonders vorteilhaft ist es, wenn die Materialschicht aus Kupfer besteht. Auch Aluminium oder Silber finden vorteilhaft Verwendung.

Die Schicht wird zweckmäßigerweise in einer Dicke von 5 - 50 $\mu$m aufgetragen. Dabei kann eine Verminderung der Dauerfestigkeit bei Reibkorrosion verhindert werden

(Dauerschwingfestigkeit TiAl6V4   500 N/mm$^2$
 Reibdauerhaltbarkeit - 200 N/mm$^2$
 Reibdauerhaltbarkeit mit Al - 300 N/mm$^2$
 Reibdauerhaltbarkeit mit Ag - 300 N/mm$^2$
 Reibdauerhaltbarkeit mit Cu - 500 N/mm$^2$)

T-697

hk/ba/fr
MTU MOTOREN- UND TURBINEN-UNION
MONCHEN GMBH

P a t e n t a n s p r ü c h e

1. Verfahren zum Schützen von metallenen, kraftschlüssig
   gepaarten, schwingend belasteten Maschinenteilen, insbesondere Maschinenteilen gleicher Beschaffenheit, vor
   Reibkorrosion, wobei ein direkter Kontakt zwischen den
   Fügeflächen  vermieden wird, indem zwischen den gepaarten Flächen mindestens an einer Fläche eine Materialschicht mit anderer Beschaffenheit als der der Maschinenteile angebracht wird, dadurch gekennzeichnet, daß bei
   Maschinenteilen mit oder aus Titanwerkstoffen eine
   metallene Materialschicht verwendet wird, die eine andere
   Kristallstruktur und eine geringere Härte besitzt als
   die der Titanwerkstoffe.

2. Verfahren nach Anspruch 1, dadurch gekennzeichnet, daß
   die Materialschicht durch galvanische Abscheidung am
   Maschinenteil angebracht wird.

T-697

3. Verfahren nach Anspruch 1, dadurch gekennzeichnet, daß die Materialschicht durch chemische Abscheidung am Maschinenteil angebracht wird.

4. Verfahren nach den Ansprüchen 1 bis 3, dadurch gekennzeichnet, daß die Materialschicht aus Kupfer besteht.

5. Verfahren nach den Ansprüchen 1 bis 3, dadurch gekennzeichnet, daß als Metall der Materialschicht Al oder Ag verwendet wird.

6. Verfahren nach einem der Ansprüche 1 bis 5, dadurch gekennzeichnet, daß die Materialschicht in einer Dicke von 5 - 50 um am Maschinenteil angebracht wird.

T-697

**0107775**

Nummer der Anmeldung

**EUROPÄISCHER RECHERCHENBERICHT**

Europäisches
Patentamt

EP   83 10 9171

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | EP-A-0 008 326   (MANNESMANN DEMAG AG)<br>* Ansprüche 1,3 *<br><br>--- | 1-6 | F 16 D    1/06 |
| Y | US-A-4 215 181   (R.K. BETTS)<br>*   Spalte 1, Zeilen 48-54; Spalte 4, Zeilen 18-29; Spalte 5; Spalte 6, Zeilen 1-42<br><br>----- | 1-6 | |

**RECHERCHIERTE SACHGEBIETE (Int. Cl. ³)**

F 16 B
F 16 D
C 23 F

Der vorliegende Recherchenbericht wurde für alle Patentansprüche erstellt.

| Recherchenort | Abschlußdatum der Recherche | Prüfer |
|---|---|---|
| DEN HAAG | 11-01-1984 | VAN WESTENBRUGGE A. |